(19) Europäisches Patentamt
European Patent Office
Office européen des brevets

(11) **EP 3 380 811 B1**

(12) **EUROPÄISCHE PATENTSCHRIFT**

(45) Veröffentlichungstag und Bekanntmachung des Hinweises auf die Patenterteilung:
**10.08.2022  Patentblatt 2022/32**

(21) Anmeldenummer: **16795286.0**

(22) Anmeldetag: **09.11.2016**

(51) Internationale Patentklassifikation (IPC):
*G01C 21/00* (2006.01)  *G06V 20/58* (2022.01)
*G01C 21/32* (2006.01)  *G09B 29/00* (2006.01)
*G06V 20/56* (2022.01)

(52) Gemeinsame Patentklassifikation (CPC):
**G01C 21/32; G01C 21/3819; G01C 21/3837; G06V 20/58; G06V 20/588; G09B 29/003**

(86) Internationale Anmeldenummer:
**PCT/EP2016/077125**

(87) Internationale Veröffentlichungsnummer:
**WO 2017/089137 (01.06.2017 Gazette 2017/22)**

(54) **VERFAHREN UND SYSTEM ZUM ERSTELLEN EINER DIGITALEN KARTE**

METHOD AND SYSTEM FOR CREATING A DIGITAL MAP

PROCÉDÉ ET SYSTÈME DE CRÉATION D'UNE CARTE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2015  DE 102015015158**
**01.04.2016  DE 102016205436**

(43) Veröffentlichungstag der Anmeldung:
**03.10.2018  Patentblatt 2018/40**

(73) Patentinhaber: **Volkswagen Aktiengesellschaft
38440 Wolfsburg (DE)**

(72) Erfinder:
• **TITZE, Andreas**
**38110 Braunschweig (DE)**
• **ORTMANN, Stefan**
**38102 Braunschweig (DE)**

(56) Entgegenhaltungen:
**EP-A1- 1 962 057**   **WO-A2-2009/097918**
**DE-A1-102012 208 974**   **DE-A1-102013 208 521**
**US-A1- 2008 262 721**

**Beschreibung**

Die Erfindung betrifft ein Verfahren und ein System zum Erstellen einer digitalen Karte, insbesondere für ein Kraftfahrzeug.

Moderne Kraftfahrzeuge weisen eine Vielzahl von Assistenzsystemen auf, darunter auch Navigationssysteme, welche in der Lage sind, ein Kraftfahrzeug innerhalb eines Umfeldes zu lokalisieren. Ein solches Navigationssystem basiert beispielsweise auf einem Globalen Positionsbestimmungssystem (GPS), bei dem eine Position des Kraftfahrzeugs durch Auswertung mehrerer satellitengestützter Signale bestimmt wird. Ferner sind auch Systeme bekannt, bei denen aus dem Umfeld des Kraftfahrzeugs Karten erstellt werden. Bei einer späteren Fahrt durch einen bereits kartierten Bereich kann das Kraftfahrzeug dann in der erstellten Karte lokalisiert werden.

Aus der DE 10 2014 002 821 A1 ist ein Verfahren zum Lokalisieren einer mobilen Einrichtung in einer Umgebung bekannt, wobei die Einrichtung mehrere Sensoren zum Erfassen der Umgebung der Einrichtung unter Nutzung unterschiedlicher Lokalisierungsmethoden aufweist, wobei für die Umgebung eine Referenzkarte vorliegt, die mehrere Positionen innerhalb der Umgebung umfasst, wobei für mindestens eine Position innerhalb der Umgebung mindestens eine Lokalisierungsmethode, die mit mindestens einem Sensor zum Erfassen der Umgebung durchzuführen ist, empfohlen wird, wobei für eine aktuelle Position der mobilen Einrichtung zum Lokalisieren der Einrichtung die mindestens eine laut der Referenzkarte empfohlene Lokalisierungsmethode, die mit mindestens einem Sensor durchzuführen ist, verwendet wird.

Aus der DE 10 2011 119 762 A1 ist ein für ein Kraftfahrzeug geeignetes PositionsbestimmungsSystem und ein entsprechendes Verfahren bekannt. Das System umfasst eine digitale Karte, in der Daten über ortsspezifische Merkmale lokalisiert verzeichnet sind, zumindest eine Umfelderkennungsvorrichtung zur Erfassung der ortsspezifischen Merkmale in der Umgebung des Fahrzeugs und ein mit der digitalen Karte und der Umfelderkennungsvorrichtung gekoppeltes Lokalisierungsmodul. Das Lokalisierungsmodul weist eine Verarbeitungseinheit zum Abgleich der erfassten Daten und der in der digitalen Karte verzeichneten Daten über die ortsspezifischen Merkmale und zur Lokalisierung der Fahrzeugposition anhand der in der digitalen Karte lokalisiert verzeichneten ortsspezifischen Merkmale auf. Ferner umfasst das System eine inertiale Messeinheit des Fahrzeugs für Fahrzeugbewegungsdaten, die mit dem Lokalisierungsmodul gekoppelt ist, dessen Verarbeitungseinheit konfiguriert ist, die Fahrzeugposition mittels der Fahrzeugbewegungsdaten basierend auf der anhand der ortsspezifischen Merkmale lokalisierten Position zu bestimmen.

Aus der DE 10 2012 208 974 A1 sind ein Verfahren und ein System zum sensorbasierten Aufbauen eines Umgebungsmodells bekannt. Diese können den geschätzten Aufenthaltsort eines Fahrzeugs bestimmen, einen Aufenthaltsort eines Objekts relativ zu dem Fahrzeug unter Verwendung eines Sensors, der mit dem Fahrzeug verbunden ist, messen und einen aktualisierten Fahrzeugaufenthaltsort unter Verwendung des gemessenen relativen Objektaufenthaltsorts in Verbindung mit zuvor gespeicherten Objektaufenthaltsorten bestimmen. Der geschätzte Fahrzeugaufenthaltsort kann unter Verwendung eines Systems bestimmt werden, das sich von demjenigen unterscheidet, das mit dem Sensor verbunden ist, zum Beispiel einem GPS-System. Der Objektaufenthaltsort kann relativ zu einer Teilkarte gemessen werden, die dem Aufenthaltsort des Fahrzeugs entspricht.

Aus der DE 10 2013 208 521 A1 ist ein Verfahren zum kollektiven Erlernen und Erstellen eines digitalen Straßenmodells bekannt. Es werden dabei von einer Mehrzahl von Fahrzeugen Trajektorien- und Perzeptionsdaten erfasst. Es werden Assoziierungen zwischen den Trajektorien erstellt, indem für entsprechende, zu assoziierende Trajektorienpunkte Merkmalsraster und Wahrscheinlichkeitsfeld-Merkmalsraster gebildet werden und diese korreliert werden, um Assoziationshypothesen zu bilden. Basierend auf den Assoziierungen, sowie auf Basis von Odometrie- und Positionserfassungen wird ein Informationsgraph gebildet und das zugehörige Optimierungsproblem zur Schätzung optimaler Trajektorienpunkte gelöst. Die erfassten Perzeptionsdaten werden auf Basis der geschätzten Trajektorienpunkte bewertet, aggregiert und fusioniert, um ein hochgenaues Straßenmodell zu erstellen.

Aus der WO 2009/097918 A2 sind ein Fahrerassistenzverfahren und eine Fahrerassistenzvorrichtung auf der Basis von Fahrstreifeninformation bekannt, wobei abhängig von der Fahrstreifeninformation eine Fahrerinformation und/oder eine Aktion ausgelöst werden, und wobei die Fahrstreifeninformation aus wenigstens zwei den Fahrstreifen kennzeichnenden Informationen abgeleitet wird, wobei diese Informationen mittels eines insbesondere mindestens einen Videosensor umfassenden bordeigenen Sensorsystems gewonnen wird. Zwecks genauer Erfassung der Krümmung des Fahrstreifens werden der Fahrbahn zugeordnete diskrete shape points und die dem jeweiligen shape point zugeordnete Krümmungswerte aus einer digitalen Karte des Fahrstreifens entnommen. Die Krümmung des Fahrstreifens wird durch Fusion der von dem bordeigenen Sensorsystem des Fahrzeugs gewonnenen Daten mit den aus der digitalen Karte entnommenen Daten ermittelt.

Der Erfindung liegt das technische Problem zu Grunde, ein Verfahren und eine System zum Erstellen einer digitalen Karte zu schaffen, bei der das Lokalisieren, insbesondere ohne eine vorherige Positionsbestimmung mittels eines GPS, verbessert ist.

Die technische Aufgabe wird erfindungsgemäß durch ein Verfahren mit den Merkmalen des Patentanspruchs 1 und ein System mit den Merkmalen des Patentanspruchs 8 gelöst. Vorteilhafte Ausgestaltungen der Erfindung ergeben sich aus den Unteransprüchen.

Es wird ein Verfahren zum Erstellen einer digitalen Karte zur Verfügung gestellt, umfassend die folgenden Schritte in mindestens einer mobilen Einrichtung: Erfassen einer Bilderabfolge eines Umfeldes der mindestens einen mobilen Einrichtung durch mindestens eine Kamera, Erkennen und Klassifizieren von Objekten in der erfassten Bilderabfolge durch eine Auswerteeinheit, Bestimmen von Objektpositionen der Objekte relativ zur mobilen Einrichtung durch die Auswerteeinheit, Festlegen eines Teilstückes im Umfeld, wobei das Teilstück eine vorbestimmte Größe, sowie vorbestimmte Begrenzungen aufweist, wobei die hintere Begrenzung eines vorderen Teilstücks der vorderen Begrenzung eines davor festgelegten Teilstücks entspricht, Zuordnen der erkannten und klassifizierten Objekte zu den bestimmten Objektpositionen in dem festgelegten Teilstück, Ermitteln einer in dem Teilstück vorhandenen Fahrspur durch die Auswerteeinheit, Übermitteln von Objektinformationen und der Objektpositionen der erkannten und klassifizierten Objekte, Teilstückinformationen zu dem festgelegten Teilstück, Fahrspurinformationen und einer Zeitinformation an eine Kartenerstellungseinrichtung durch eine Sendeeinrichtung, Wiederholen der vorangegangenen Schritte zum Festlegen weiterer Teilstücke des Umfeldes; ferner umfassend die folgenden Schritte in der Kartenerstellungseinrichtung: Empfangen der Objektinformationen und der Objektpositionen, der Teilstückinformationen, der Fahrspurinformationen und der Zeitinformation zu jedem der Teilstücke von der mindestens einen mobilen Einrichtung, Vergleichen der einzelnen Teilstücke miteinander auf Grundlage der Objektinformationen und Objektpositionen, der Teilstückinformationen, der Fahrspurinformationen und der Zeitinformationen, Zusammenfügen der Teilstücke der mindestens einen mobilen Einrichtung an ihren jeweils benachbarten Begrenzungen, Fusionieren der zusammengefügten Teilstücke der mindestens einen mobilen Einrichtung zu einer digitalen Karte.

Es wird ein System zum Erstellen einer digitalen Karte entsprechend Anspruch 8 geschaffen.

Insbesondere ist vorgesehen, dass die mobile Einrichtung ein Kraftfahrzeug ist. Die Kartenerstellungseinrichtung ist ein zentraler Server.

Insbesondere kommuniziert das Kraftfahrzeug über eine drahtlose Kommunikationsverbindung mit dem Server.

Weitere mobile Einrichtungen sind dann beispielsweise weitere Kraftfahrzeuge, welche ebenfalls mit dem zentralen Server kommunizieren.

Dabei ist vorgesehen, dass die ermittelte Fahrspur in einem Teilstück durch einen Korridor aus einer linken Fahrspurbegrenzung und einer rechten Fahrspurbegrenzung beschrieben wird, wobei die linke und die rechte Fahrspurbegrenzung jeweils als Fahrspurfunktionen beschrieben werden. Dies hat den Vorteil, dass eine Datenmenge, welche zum Beschreiben der Fahrspur notwendig ist, reduziert werden kann. Dadurch wird Bandbreite bei der Kommunikation über eine Kommunikationsverbindung zwischen der mindestens einen mobilen Einrichtung und der Kartenerstellungseinrichtung gespart.

Insbesondere ist bei einer Ausführungsform vorgesehen, dass die Fahrspurfunktionen als Polynomfunktionen dritten Grades ausgebildet sind. Dies führt zu einer besonders starken Datenreduktion bei gleichzeitiger Flexibilität. Pro Koordinate müssen dann nur vier Koeffizienten übertragen werden, so dass insgesamt bei drei Dimensionen zwölf Koeffizienten pro Teilstück übertragen werden müssen. Es kann dabei insbesondere vorgesehen sein, dass die Polynomfunktionen als unabhängige Variable eine Zeit aufweisen. Es ist aber genauso möglich, eine Ortskoordinate, beispielsweise einen Fahrweg etc. als unabhängige Variable zu verwenden.

In einer weiteren Ausführungsform ist vorgesehen, dass das Zusammenfügen der Teilstücke der mindestens einen mobilen Einrichtung an ihren jeweils benachbarten Begrenzungen durch einen Ähnlichkeitsvergleich durchgeführt wird, wobei ein vorbestimmter Wert für eine Ähnlichkeit überschritten sein muss, damit Teilstücke als benachbart erkannt werden. Dies kann beispielsweise für einen Bereich um die Begrenzungen herum erfolgen. In diesem Bereich wird dann eine Ähnlichkeitsanalyse, beispielsweise über gängige Objekt- und Mustererkennungsverfahren durchgeführt. Die Bereiche, welche eine große Ähnlichkeit bei den Mustern und Objekten zeigen, werden als benachbart identifiziert und anschließend zusammengefügt, so dass auf diese Weise schrittweise aus den Teilstücken die digitale Karte konstruiert werden kann.

In einer Ausführungsform ist vorgesehen, dass das Fusionieren der zusammengefügten Teilstücke der mindestens einen mobilen Einrichtung unter Berücksichtigung einer Gewichtung durchgeführt wird, wobei die Gewichtung durch die Zeitinformation und/oder mindestens ein weiteres Kriterium festgelegt wird. Dadurch wird gewährleistet, dass beispielsweise immer ein möglichst aktuelles Abbild des Umfeldes in der digitalen Karte hinterlegt ist. Dies kann insbesondere relevant sein, wenn Hindernisse auf den Fahrspuren, beispielsweise Objekte oder eine Baustelle, erstmalig erkannt werden oder nach ihrem Verschwinden erstmalig nicht mehr erkannt werden. Ebenso können sich andere Objekte im Umfeld verändern. Die Gewichtung für übermittelte Daten kann beispielsweise umso höher sein, je näher übermittelte Objektinformationen und Objektpositionen, Teilstückinformationen und Fahrspurinformationen einem gegenwärtigen Zeitpunkt sind. Es können aber auch andere Gewichtungskriterien als weiteres Kriterium vorgesehen sein, beispielsweise eine vorgegebene Gewichtung für bestimmte Arten von mobilen Einrichtungen oder bestimmte Teilstücke etc.

Insbesondere ist bei einer weiteren Ausführungsform vorgesehen, dass das Fusionieren der zusammengefügten Teilstücke der mindestens einen mobilen Einrichtung ein Mitteln mehrerer für ein Objekt bestimmter Objektpositionen umfasst. Dies hat den Vorteil, dass der für das Objekt bestimmten Objektposition ein besserer Schätzwert zugeordnet wird, da sich ein Messfehler mit der Anzahl der Messungen reduziert.

In einer weiteren Ausführungsform ist vorgesehen, dass das Zusammenfügen der Teilstücke der mindestens einen mobilen Einrichtung an ihren jeweils benachbarten Begrenzungen, zumindest in diesen Begrenzungen oder Bereichen um die Begrenzungen herum, einen Abgleich der Fahrspuren oder der Fahrspurfunktionen der Teilstücke umfasst. Das Zusammenfügen kann dann besonders effizient und zeitsparend durchgeführt werden, da lediglich die Endbereiche der Fahrspuren bzw. Fahrspurfunktionen miteinander abgeglichen werden müssen, so dass der notwendige Rechenaufwand reduziert wird.

In einer Ausführungsform ist vorgesehen, dass von der Auswerteeinheit zu einem Teilstück zusätzlich Zusatzinformationen erfasst werden, welche von der Sendeeinrichtung an die Kartenerstellungseinrichtung übermittelt werden und/oder diese Zusatzinformationen oder weitere Zusatzinformationen von der Kartenerstellungseinrichtung für dieses Teilstück in der digitalen Karte hinterlegt werden. Eine solche Zusatzinformation kann beispielsweise eine Zusatzinformation über einen Zustand der Fahrspuren beinhalten. So kann in der digitalen Karte hinterlegt werden, ob die Fahrspur beispielsweise auf Grund der Witterungsverhältnisse nass oder glatt ist, oder ob der allgemeine Zustand gut oder schlecht ist. Die Zusatzinformation ist dann in der digitalen Karte hinterlegt und kann weiteren mobilen Einrichtungen zur Verfügung gestellt werden. Es ist dabei sowohl möglich, dass die Zusatzinformationen von der mindestens einen mobilen Einrichtung bereitgestellt werden als auch, dass die Zusatzinformationen anderweitig zur Verfügung gestellt werden, beispielsweise von zentralen Verkehrsleit- oder Informationssystemen.

Teile der mobilen Einrichtung, der Kartenerstellungseinrichtung und auch des Systems können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform des Systems zum Erstellen einer digitalen Karte;

Fig. 2    eine schematische Darstellung eines typischen Umfeldes eines Kraftfahrzeugs zur Verdeutlichung des Verfahrens;

Fig. 3    eine schematische Darstellung eines festgelegten Teilstückes mit Fahrspurfunktionen.

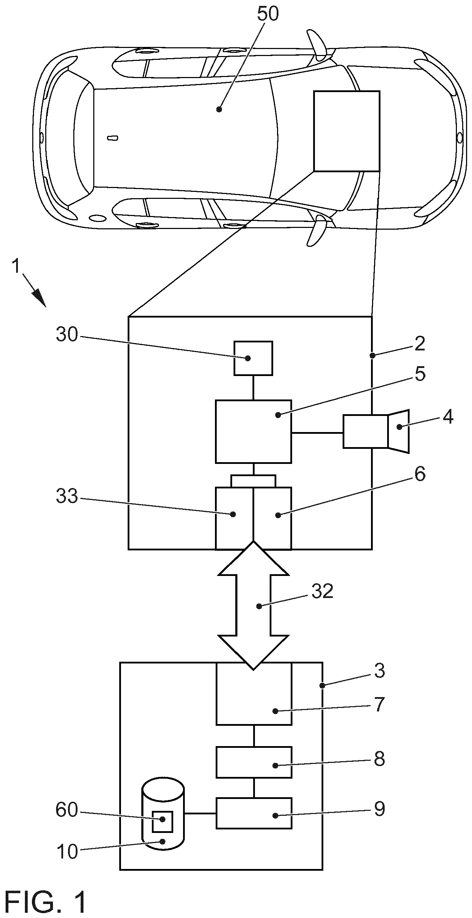

In Fig. 1 ist eine schematische Darstellung eines Systems 1 zum Erstellen einer digitalen Karte 60 dargestellt. Das System 1 umfasst mindestens eine mobile Einrichtung 2, welche in diesem Beispiel in einem Kraftfahrzeug 50 ausgebildet ist, und eine Kartenerstellungseinrichtung 3, welche beispielsweise als ein zentraler Server ausgebildet ist. Die mobile Einrichtung 2 umfasst eine Kamera 4, eine Auswerteeinheit 5, eine Sendeeinrichtung 6, einen Höhensensor 30 und eine Empfangseinrichtung 33. Die Kartenerstellungseinrichtung 3 umfasst beispielsweise eine Empfangseinrichtung 7, eine Zusammenfügeeinrichtung 8, eine Fusionierungseinrichtung 9 und einen Speicher 10, in dem die digitale Karte 60 abgelegt ist.

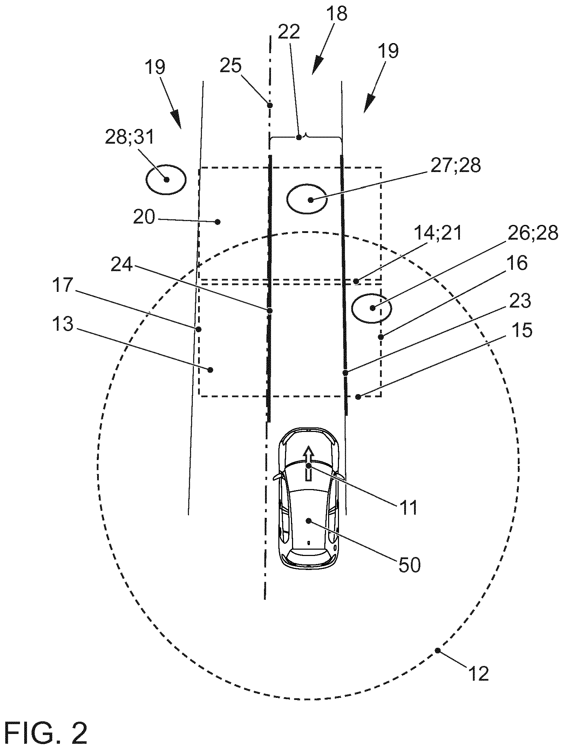

Fig. 2 zeigt eine schematische Darstellung eines typischen Umfeldes 12 eines Kraftfahrzeugs 50 zur Verdeutlichung des Verfahrens. Die Kamera 4 (siehe Fig. 1) weist beispielsweise in eine Fahrtrichtung 11 des Kraftfahrzeugs 50. Die Kamera 4 erfasst eine Abfolge von Bildern des Umfeldes 12 des Kraftfahrzeugs 50. Die erfasste Abfolge von Bildern wird der Auswerteeinheit 5 von der Kamera 4 zugeleitet. Aus der Abfolge von Bildern legt die Auswerteeinheit 5 ein Teilstück 13 fest. Dieses Teilstück 13 hat eine vorgegebene Größe. Ein solches Teilstück 13 weist darüber hinaus eine vordere Begrenzung 14, eine hintere Begrenzung 15, eine rechte Begrenzung 16 und eine linke Begrenzung 17 auf. In dem festgelegten Teilstück 13 befindet sich ein Abschnitt einer Straße 18, auf der sich das Kraftfahrzeug 50 gerade befindet, sowie ein Ausschnitt der Umgebung 19 der Straße 18. Ein weiteres Teilstück 20 wird zu einem späteren Zeitpunkt aus einer weiteren Abfolge von Bildern festgelegt, so dass die hintere Begrenzung 21 des weiteren Teilstückes 20 gleich der vorderen Begrenzung 14 des davor festgelegten Teilstückes 13 ist. Auf diese Weise wird das Umfeld 12 des Kraftfahrzeugs 50 schrittweise zu verschiedenen Zeitpunkten erfasst und sukzessive in Form von Teilstücken 13, 20 aneinander gereiht.

In jedem Teilstück 13, 20 ermittelt die Auswerteeinheit 5 eine Fahrspur 22 des Kraftfahrzeugs 50. In diesem Beispiel wird die Fahrspur 22 auf der rechten Seite durch die Fahrbahnbegrenzung 23 der Straße 18 begrenzt, wobei die rechte Fahrbahnbegrenzung 23 beispielsweise durch die rechte Fahrbahnlinie gegeben sein kann. Die linke Fahrspurbegrenzung 24 der Fahrspur 22 ist beispielsweise durch eine Mittellinie 25 der Straße 18 gegeben.

Die jeweilige Fahrspurbegrenzung 23, 24 der Fahrspur 22 wird mittels eines Bilderkennungsverfahrens in der Auswerteeinheit 5 erkannt und beispielsweise für jede Koordinate mathematisch in Form einer Polynomfunktion dritten Grades dargestellt:

$$X(t) = a_3 t^3 + a_2 t^2 + a_1 t + a_0,$$

$$Y(t) = b_3 t^3 + b_2 t^2 + b_1 t + b_0,$$

$$Z(t) = c_3t^3 + c_2t^2 + c_1t + c_0.$$

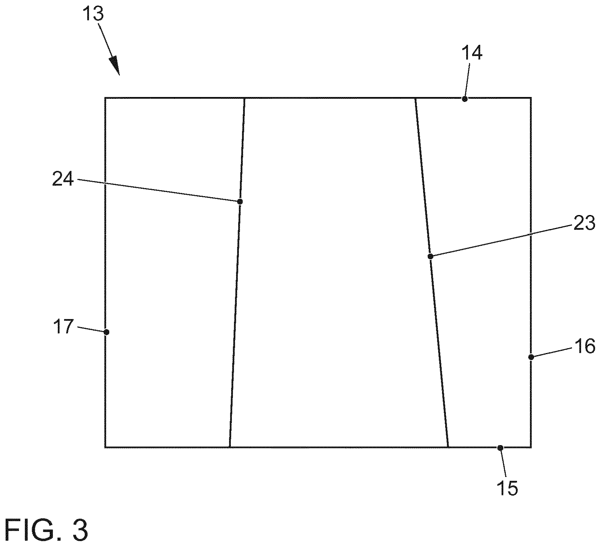

Die Koordinaten X, Y, und Z beziehen sich auf ein Koordinatensystem, welches beispielsweise auf die Kameraposition oder den Mittelpunkt der vorderen Begrenzung 14 des Teilstückes 22 bezogen ist. Die Koordinate X beschreibt das Koordinatensystem in Fahrtrichtung 11, die Koordinate Y in seitlicher Richtung und die Koordinate Z in vertikaler Richtung. Die Funktion X(t) beschreibt somit eine Funktion in X-Richtung in Abhängigkeit einer Zeit t, welche in Bezug gesetzt wird mit der Zeit, zu welcher das Teilstück 13 ermittelt wurde. Somit ist jeder Punkt der erkannten Fahrspur 22 räumlich definiert. Die Koeffizienten der Fahrspurfunktionen können mathematisch durch geeignete Fitverfahren ermittelt werden, so dass die einzelnen Fahrspurfunktionen durch die ermittelten Koeffizienten $a_1$, $a_2$, $a_3$, $a_0$ und $b_1$, $b_2$, $b_3$, $b_0$ und $c_1$,$c_2$, $c_3$,$c_0$ festgelegt sind und als Funktion der Zeit die Fahrspurbegrenzungen 23, 24 abbilden. Eine schematische Darstellung des Teilstückes 13 mit den Fahrspurfunktionen ist in Fig. 3 gezeigt.

Diese Koeffizienten bilden eine Fahrspurinformation, welche zusammen mit einer Zeitinformation und einer Teilstückinformation zu der Kartenerstellungseinrichtung 3 bzw. dem Server mittels der Sendeeinrichtung 6 der mobilen Einrichtung 2 übermittelt werden. Das Übermitteln findet beispielsweise mittels einer drahtlosen Kommunikationsverbindung 32 statt. Durch die Beschreibung der Fahrspur 22 mittels der Polynomfunktionen kann die zu übertragende Datenmenge deutlich reduziert werden, so dass pro Teilstück 13, 20 nur geringe Datenmengen übermittelt werden müssen.

Es ist weiterhin vorgesehen, dass auch weitere Objekte 28 in dem Umfeld 12 erfasst werden. So gibt es beispielsweise Landmarken 26, 27 in der Umgebung 19 der Fahrspur 22 und im Umfeld 12. Die Landmarke 26 kann beispielsweise ein Baum oder eine Straßenbeleuchtung sein, die Landmarke 27 kann aber auch ein Hindernis auf der Fahrspur 22 sein. Dabei kann es sich beispielsweise um ein weiteres Kraftfahrzeug handeln, welches das Ende eines Staus markiert oder ein Hinweis darauf, dass auf dieser Fahrspur 22 gearbeitet wird und die Fahrspur 22 gewechselt werden muss.

Es ist ferner vorgesehen, dass das Objekt 28 beispielsweise auch Schnee oder Aquaplaning auf der Fahrspur 22 beschreiben kann, wobei ein solcher Zustand mittels gängiger Verfahren der Bildanalyse identifiziert wird.

Es kann darüber hinaus vorgesehen sein, dass mittels der Funktionen X(t), Y(t) und Z(t) oder in Form einer durch die Bildanalyse bereitgestellten Zusatzinformation, beispielsweise Parkhausinformationen, insbesondere Informationen zu freien Parkplätzen, an die Kartenerstellungseinrichtung 3 übermittelt werden. Insbesondere ist vorgesehen, dass eine von einem Höhensensor 30 (siehe Fig. 1) des Kraftfahrzeugs 50 erfasste Höheninformation, zusammen mit den Informationen zu den Teilstücken 13, 20, an den Server übermittelt werden, da auf diese Weise eine zu einem Parkplatz gehörende Parkhausebene oder Tiefgaragenebene identifiziert werden kann. Sensoren zur Ermittlung der geografischen Höhe in Bezug auf Normal Null, also dem Meeresspiegel, sind aus dem Stand der Technik bekannt.

Die Kamera 4 erfasst einen Bildinhalt und mittels eines geeigneten Verfahrens für die Objekterkennung ist es möglich, zu bestimmen, um welches Objekt 28 es sich handelt. Es ist ebenfalls möglich, dass eine Position des Objektes 28, beispielsweise relativ zur Kamera 4, bestimmt wird. Dies geschieht beispielsweise durch den Vergleich der erkannten Objekte 28 mit in Tabellen abgespeicherten Objekten. Dadurch wird eine Größe der Objekte 28 bestimmt und es kann dann auf einen Abstand zum Kraftfahrzeug 50 bzw. zur Kamera 4 geschlossen werden. Durch eine Bestimmung der Winkel der Objekte 28 relativ zur Kamera 4 in mehreren nacheinander ermittelten Teilstücken 13, 20, ist die Position des Objektes 28 bekannt. Die Position kann beispielsweise in Form eines Vektors oder als eine Koordinate mit einem entsprechenden Objekttyp definiert werden. Diese Objektinformationen werden ebenfalls als Funktion der Zeit zu jedem Teilstück 13, 20 ermittelt und mittels der Sendeeinrichtung 6 an die Kartenerstellungseinrichtung 3 bzw. den Server übermittelt.

Die Kartenerstellungseinrichtung 3 empfängt Objektinformationen und zugehörige Objektpositionen, Teilstückinformationen, Fahrspurinformationen und Zeitinformationen zu jedem der Teilstücke. Mittels eines geeigneten Verfahrens werden diese derart zusammengesetzt, dass eine digitale Karte 60 mit der Fahrspur 22 entsteht. Dies geschieht erfinderisch ohne Daten eines Globalen Positionsbestimmungssystems (GPS). Dabei können beispielsweise bekannte Mustererkennungsverfahren verwendet werden. Ein solches Verfahren ist mit den vorliegenden Informationen in der Lage, die Teilstückinformationen zuzuordnen und die Teilstücke 13, 20 bei entsprechender Übereinstimmung aneinander zu fügen.

Die Ähnlichkeit zwischen verschiedenen Teilstücken 13, 20 wird beispielsweise durch einen Vergleich der Koeffizienten der Fahrspurfunktionen bestimmt. Wenn diese übereinstimmen, kann davon ausgegangen werden, dass es sich um dieselbe Fahrspur 22 handelt. Zur Verifizierung werden noch weitere Informationen miteinander verglichen, wie beispielsweise die Objektinformationen zur Art und Lage von Objekten 28, die sich außerhalb der Fahrspur 22 befinden.

Die digitale Karte 60 der Fahrspur 22 wird dadurch verbessert, dass eine Vielzahl mobiler Einrichtungen 2, beispielsweise eine Vielzahl von Kraftfahrzeugen 50, jeweils Objektinformationen und zugehörige Objektpositionen, Teilstückinformationen, Fahrspurinformationen und Zeitinformationen zu jedem der Teilstücke an die Kartenerstellungseinrichtung 3 sendet und die Kartenerstellungseinrichtung 3 diese Informationen verwendet, um daraus, beispielsweise mittels einer Gewichtung und einem Mitteln bzw. Übereinanderlegen, die digitale Karte 60 mit besonders hoher Genauigkeit zu erstellen.

Hat sich beispielsweise ein Objekt 28 eines Teilstückes 13, 20 verändert, stellt das Verfahren in der Kartenerstellungseinrichtung 3 sicher, dass in einem ersten Schritt eine bestimmte Anzahl von Informationen übereinstimmen. Dies können zum Beispiel die Koeffizienten der Fahrspuren 22 sein. Stimmen bei einem Vergleich auch weitere Parameter überein, wie zum Beispiel Objektgrößen und Objekttypen der Objekte 28 (zum Beispiel bei einem Baum), dann wird davon ausgegangen, dass es sich um ein Teilstück 13, 20 handelt, welches bereits zu einem früheren Zeitpunkt erfasst und in der digitalen Karte 60 abgelegt wurde.

Zum Beispiel stimmt bei den Teilstücken 13, 20 der Objekttyp und die Objektgröße eines sich links von der linken Fahrspur befindlichen Objektes 28, beispielsweise ein Verkehrszeichens 31, ebenfalls mit den früher erstellten Informationen der Teilstücke 13, 20 überein. Jedoch mag der Inhalt des Verkehrszeichens 31 sich in der Zwischenzeit verändert haben (beispielsweise weil sich eine Geschwindigkeitsvorgabe geändert hat). Aufgrund der Tatsache, dass eine bestimmte Anzahl von Informationen übereinstimmt, also ein zeitlich aktuelleres Teilstück 13, 20 einer Position in der digitalen Karte zugeordnet wurde, und ein kleiner Bereich (Inhalt des Verkehrszeichens 31) neu ist, würde davon ausgegangen, dass das Teilstück aktualisiert werden muss und es erfolgt ein Austausch der Teilstücke 13, 20 durch die Kartenerstellungseinrichtung 3. In diesem Beispiel wird somit die Geschwindigkeitsvorgabe aktualisiert.

Mittels der Erkennung der statischen Landmarken 26, 27 und der Mittelung der zugehörigen Objektpositionen kann eine hoch genaue Verortung in einem Weltkoordinatensystem berechnet werden. Diese dient der Verankerung der Teilstücke 13, 20 in der digitalen Karte 60.

In der Kartenerstellungseinrichtung 3 bzw. in dem Server wird somit ein Abbild des Umfeldes 12 in einem lokalen (digitale Karte 60) und globalen Koordinatensystem zusammengestellt, welches aus einer Vielzahl von Informationen aus Teilstücken 13, 20 besteht. Insbesondere können somit eine Vielzahl von erfassten Abfolgen von Bildern mehrerer mobiler Einrichtungen zu einer einzigen, sehr genauen digitalen Karte 60 fusioniert werden.

Die Kartenerstellungseinrichtung ist in der Lage, das zusammengestellte Abbild des Umfeldes als digitale Karte wieder an die mobilen Einrichtungen 2, insbesondere an das Kraftfahrzeug 50, zu senden. Empfängt eine mobile Einrichtung 2 diese Informationen mittels einer Empfangseinrichtung 33, so wird das empfangene Teilstück des Umfeldes 12 in der Auswerteeinheit 5 mit dem gerade aufgenommenen Teilstück 13 verglichen und die genaue Position der mobilen Einrichtung 2 bzw. des Kraftfahrzeugs 50 wird durch Auswerten der Abweichung festgelegt. Wenn diese Position fest steht, werden der mobilen Einrichtung 2 bzw. dem Kraftfahrzeug 50 weitere Informationen von der Kartenerstellungseinrichtung 3 bzw. vom Server zur Verfügung gestellt, wie beispielsweise Stauinformationen und/oder Zustände der Fahrbahnoberflächen. Diese Informationen sind dabei nicht global, sondern spurgenau für die entsprechende Fahrspur 22 des Kraftfahrzeugs 50 gestaltet. Mit dem beschriebenen Verfahren ist es somit möglich, dem Fahrer auf einer mehrspurigen Straße 18 zu zeigen, auf welcher Fahrspur 22 der Schnee auf der Fahrbahnoberfläche von einem Winterdienst schon beseitigt wurde, und auf welcher Fahrspur 22 noch Schnee liegt. Weiterhin kann beispielsweise dargestellt werden, auf welcher Fahrspur 22 ein Stau vorliegt, und auf welcher Fahrspur 22 der Verkehr fließt. In Parkhäusern oder Tiefgaragen können beispielsweise die freien Parkplätze in der entsprechenden Ebene dargestellt werden.

Mittels der digitalen Karten 60, die die Kartenerstellungseinrichtung 3 bzw. der Server an die Verkehrsteilnehmer aussendet, besteht die Möglichkeit, ein genaues Abbild des Umfeldes 12 zu erlangen.

Ferner kann auch vorgesehen sein, dass durch eine zusätzlich vorhandene GPS-Information die Kartenerstellungseinrichtung 3 bzw. der Server in der Lage sind, den Standpunkt des Verkehrsteilnehmers zu bestimmen und diesem das Abbild des Umfeldes 12 in Form der digitalen Karte 60 zur Verfügung zu stellen.

Wenn eine mobile Einrichtung 2 bzw. ein Kraftfahrzeug 50 nicht über einen GPS-Empfang (z.B. in einer Garage) verfügt, besteht die Möglichkeit, dass eine Position der mobilen Einrichtung 2 über eine zuletzt ermittelte Position, für welche Teilstücke 13, 20 an die Kartenerstellungseinrichtung 3 bzw. den Server übermittelt wurden, bestimmt wird. Die Kartenerstellungseinrichtung 3 bzw. der Server haben die digitale Karte 60 mittels der Teilstücke 13, 20 zusammengesetzt und sind somit über die Position der mobilen Einrichtung 2 bzw. des Kraftfahrzeugs 50 informiert. Startet der Fahrer das Kraftfahrzeug 50 und erfasst die am Kraftfahrzeug 50 befindliche Kamera 4 Bilder, sendet die Kartenerstellungseinrichtung 3 bzw. der Server Informationen korrespondierend zu dem Bereich des zuletzt empfangenen Bildes dieser Kamera 4. Ein Verfahren im Kraftfahrzeug 50 vergleicht dann die aktuellen Bildinhalte mit den von der Kartenerstellungseinrichtung 3 bzw. vom Server empfangenen und ist somit in der Lage, sich in der digitalen Karte 60 zu positionieren, sofern Bildinformationen von Teilstücken 13, 20 übereinstimmen. Hierzu kann zusätzlich eine Eigenbewegungsschätzung basierend auf einer Odometrie vorgenommen werden, um die mobile Einrichtung 2 bzw. das Kraftfahrzeug 50 mittels der digitalen Karte 60 ohne GPS-Information in dem Umfeld 12 zu verorten.

Eine mobile Einrichtung 2 kann beispielsweise auch ein Smartphone, ein Laptop oder ein Notebook sein. Diese können ebenfalls Informationen des Umfelds mittels des beschriebenen Verfahrens erfassen, senden und empfangen, so dass der Empfänger eine präzise Abbildung seines Umfeldes bereitgestellt bekommt. Dies ist insbesondere für Wanderer, Fahrradfahrer und dergleichen von Vorteil, wenn diese eine entsprechende mobile Einrichtung 2 mit einer Kamera 4 bei sich haben und Informationen zum Umfeld 12 benötigen.

In einer Weiterbildung ist es auch möglich, dass eine Person mittels einer mobilen Einrichtung 2, welche über eine Kamera 4, eine Sendeeinrichtung 6, eine Empfangseinrichtung 33 und eines geeigneten Verfahrens verfügt, ebenfalls Teilstücke 13, 20 und Objektinformationen, Objektpositionen und Zusatzinformationen ermittelt, so dass diese zur Verbesserung der digitalen Karte 60 verwendet werden können. Somit ist das beschriebene Verfahren nicht nur auf Fahrspuren 22 für Kraftfahrzeuge 50 begrenzt, sondern kann auf sämtliche Bereiche, die mittels einer mobilen Einrichtung 2 in einem Umfeld 12 erfasst werden können, ausgeweitet werden.

Das Zusammenfügen der einzelnen Teilstücke 13, 20 wird in der Kartenerstellungseinrichtung 3 beispielsweise von einer Zusammenfügeeinrichtung 8 vorgenommen. Die Mittelung von mehreren Teilstücken 13, 20 mehrerer mobiler Einrichtungen 2 wird in der Kartenerstellungseinrichtung 3 beispielsweise von der Fusionierungseinrichtung 9 vorgenommen. Die digitale Karte 60 wird in dem Speicher 10 hinterlegt und kann dort jederzeit verändert und wieder abgerufen werden.

Teile der mobilen Einrichtung 2, der Kartenerstellungseinrichtung 3 und auch des Systems 1 können einzeln oder zusammengefasst als eine Kombination von Hardware und Software ausgebildet sein, beispielsweise als Programmcode, der auf einem Mikrocontroller oder Mikroprozessor ausgeführt wird.

**Bezugszeichenliste**

1 System
2 mobile Einrichtung
3 Kartenerstellungseinrichtung
4 Kamera
5 Auswerteeinheit
6 Sendeeinrichtung
7 Empfangseinrichtung
8 Zusammenfügeeinrichtung
9 Fusionierungseinrichtung
10 Speicher
11 Fahrtrichtung
12 Umfeld
13 Teilstück
14 vordere Begrenzung
15 hintere Begrenzung
16 rechte Begrenzung
17 linke Begrenzung
18 Straße
19 Umgebung
20 weiteres Teilstück
21 hintere Begrenzung des weiteren Teilstückes
22 Fahrspur
23 rechte Fahrbahnbegrenzung
24 linke Fahrspurbegrenzung
25 Mittellinie
26 Landmarke
27 Landmarke
28 Objekt
30 Höhensensor
31 Verkehrszeichen
32 Kommunikationsverbindung
33 Empfangseinrichtung
50 Kraftfahrzeug
60 digitale Karte

**Patentansprüche**

1. Verfahren zum Erstellen einer digitalen Karte (60) umfassend die Schritte:

- in mindestens einer mobilen Einrichtung (2):

Erfassen einer Bilderabfolge eines Umfeldes (12) der mindestens einen mobilen Einrichtung (2) durch mindestens eine Kamera (4),
Erkennen und Klassifizieren von Objekten (28) in der erfassten Bilderabfolge durch eine Auswerteeinheit (5),
Bestimmen von Objektpositionen der Objekte (28) relativ zur mobilen Einrichtung (2) durch die Auswerteeinheit (5),
Festlegen eines Teilstückes (13, 20) im Umfeld (12), wobei das Teilstück (13, 20) eine vorbestimmte Größe, sowie vorbestimmte Begrenzungen (14, 15, 16, 17, 21) aufweist, wobei die hintere Begrenzung (21) eines vorderen Teilstücks (20) der vorderen Begrenzung (14) eines davor festgelegten Teilstücks (13) entspricht,
Zuordnen der erkannten und klassifizierten Objekte (28) zu den bestimmten Objektpositionen in dem festgelegten Teilstück (13, 20),
Ermitteln einer in dem Teilstück (13, 20) vorhandenen Fahrspur (22) durch die Auswerteeinheit (5), wobei die ermittelte Fahrspur (22) in einem Teilstück (13, 20) durch einen Korridor aus einer linken Fahrspurbegrenzung (24) und einer rechten Fahrspurbegrenzung (23) beschrieben wird, wobei die linke Fahrspurbegrenzung (24) und die rechte Fahrspurbegrenzung (23) jeweils als Fahrspurfunktionen beschrieben werden
Übermitteln von Objektinformationen und der Objektpositionen der erkannten und klassifizierten Objekte (28), Teilstückinformationen zu dem festgelegten Teilstück (13, 20), Fahrspurinformationen und einer Zeitinformation an eine Kartenerstellungseinrichtung (3) durch eine Sendeeinrichtung (6), wobei die Kartenerstellungseinrichtung (3) ein zentraler Server außerhalb der mobilen Einrichtung (2) ist,

Wiederholen der vorangegangenen Schritte zum Festlegen weiterer Teilstücke (13, 20) des Umfeldes (12);

- in der Kartenerstellungseinrichtung (3):

Empfangen der Objektinformationen und der Objektpositionen, der Teilstückinformationen, der Fahrspurinformationen und der Zeitinformation zu jedem der Teilstücke (13, 20) von der mindestens einen mobilen Einrichtung (2), Vergleichen der einzelnen Teilstücke (13, 20) miteinander auf Grundlage der Objektinformationen und Objektpositionen, der Teilstückinformationen, der Fahrspurinformationen und der Zeitinformationen,

Zusammenfügen der Teilstücke (13, 20) der mindestens einen mobilen Einrichtung (2) an ihren jeweils benachbarten Begrenzungen (14, 21),

Fusionieren der zusammengefügten Teilstücke (13, 20) der mindestens einen mobilen Einrichtung (2) zu einer digitalen Karte (60).

2. Verfahren nach Anspruch 1, **dadurch gekennzeichnet, dass** die Fahrspurfunktionen als Polynomfunktionen dritten Grades ausgebildet werden.

3. Verfahren nach einem der vorangegangenen Ansprüche, **dadurch gekennzeichnet, dass** das Zusammenfügen der Teilstücke (13, 20) der mindestens einen mobilen Einrichtung (2) an ihren jeweils benachbarten Begrenzungen (14, 21) durch einen Ähnlichkeitsvergleich durchgeführt wird und wobei ein vorbestimmter Wert für eine Ähnlichkeit überschritten sein muss, damit Teilstücke als benachbart erkannt werden.

4. Verfahren nach einem der vorangegangenen Ansprüche, **dadurch gekennzeichnet, dass** das Fusionieren der zusammengefügten Teilstücke (13, 20) der mindestens einen mobilen Einrichtung (2) unter Berücksichtigung einer Gewichtung durchgeführt wird, wobei die Gewichtung durch die Zeitinformation und/oder mindestens ein weiteres Kriterium festgelegt wird.

5. Verfahren nach einem der vorangegangenen Ansprüche, **dadurch gekennzeichnet, dass** das Fusionieren der zusammengefügten Teilstücke (13, 20) der mindestens einen mobilen Einrichtung (2) ein Mitteln mehrerer für ein Objekt (28) bestimmter Objektpositionen umfasst.

6. Verfahren nach einem der vorangegangenen Ansprüche, **dadurch gekennzeichnet, dass** das Zusammenfügen der Teilstücke (13, 20) der mindestens einen mobilen Einrichtung (2) an ihren jeweils benachbarten Begrenzungen (14, 21), zumindest in diesen Begrenzungen (14, 21) oder Bereichen um die Begrenzungen (14, 21) herum, einen Abgleich der Fahrspuren (22) oder der Fahrspurfunktionen der Teilstücke (13, 20) umfasst.

7. Verfahren nach einem der vorangegangenen Ansprüche, **dadurch gekennzeichnet, dass** von der Auswerteeinheit (5) zu einem Teilstück (13, 20) zusätzlich Zusatzinformationen erfasst werden, welche von der Sendeeinrichtung (6) an die Kartenerstellungseinrichtung (3) übermittelt werden und/oder diese Zusatzinformationen oder weitere Zusatzinformationen von der Kartenerstellungseinrichtung (3) für dieses Teilstück (13, 20) in der digitalen Karte (60) hinterlegt werden.

8. System (1) zum Erstellen einer digitalen Karte (60), umfassend:

- mindestens eine mobile Einrichtung (2), aufweisend:

mindestens eine Kamera (4) zum Erfassen einer Bilderabfolge eines Umfeldes (12) der mindestens einen mobilen Einrichtung (2), eine Auswerteeinheit (5) und

eine Sendeeinrichtung (6) zum Kommunizieren mit einer Kartenerstellungseinrichtung (3),

wobei die Auswerteeinheit (5) derart ausgebildet ist, Objekte (28) in der erfassten Bilderabfolge zu erkennen und zu klassifizieren, Objektpositionen der Objekte (28) relativ zur mobilen Einrichtung (2) zu bestimmen, ein Teilstück (13, 20) im Umfeld (12) festzulegen, wobei das Teilstück (13, 20) eine vorbestimmte Größe, sowie vorbestimmte Begrenzungen (14, 15, 16, 17, 21) aufweist, wobei die hintere Begrenzung (21) eines vorderen Teilstücks (20) der vorderen Begrenzung (14) eines davor festgelegten Teilstücks (13) entspricht, erkannte und klassifizierte Objekte (28) den bestimmten Objektpositionen in dem festgelegten Teilstück (13, 20) zuzuordnen, eine in einem Teilstück (13, 20) vorhandene Fahrspur (22) des Kraftfahrzeugs 50 zu ermitteln, wobei die ermittelte Fahrspur (22) in einem Teilstück (13, 20) durch einen Korridor aus einer linken Fahrspurbegrenzung (24) und einer rechten Fahrspurbegrenzung (23) beschrieben wird, wobei die linke Fahrspurbegrenzung (24) und die rechte Fahrspurbegrenzung (23) jeweils als Fahrspurfunktionen beschrieben werden, Objektinformationen und die Objektpositionen der erkannten und klassifizierten Objekte (28), Teilstückinformationen zu dem festgelegten Teilstück (13, 20), Fahrspurinformationen und eine Zeitinformation mittels der Sendeeinrichtung (6) an die Kartenerstellungseinrichtung (3) zu senden, wobei die Kartenerstellungseinrichtung (3) ein zentraler Server außerhalb der mobilen Einrichtung (2 ist, und

die vorangegangenen Schritte zum Festlegen weiterer Teilstücke (13, 20) des Umfeldes (12) zu wiederholen; und

- die Kartenerstellungseinrichtung (3), welche derart ausgebildet ist,
die Objektinformationen und die Objektpositionen, die Teilstückinformationen, die Fahrspurinformation und die Zeitinformation zu jedem der Teilstücke (13, 20) von der mindestens einen mobilen Einrichtung (2) zu empfangen, die einzelnen Teilstücke (13, 20) miteinander auf Grundlage der Objektinformationen und Objektpositionen, der Teilstückinformationen, der Fahrspurinformationen und der Zeitinformationen zu vergleichen, die Teilstücke (13, 20) der mindestens einen mobilen Einrichtung (2) an ihren jeweils benachbarten Begrenzungen (14, 21) zusammenzufügen und die zusammengefügten Teilstücke (13, 20) der mindestens einen mobilen Einrichtung (2) zu einer digitalen Karte (60) zu fusionieren.

## Claims

1. Method for creating a digital map (60), comprising the following steps:

    - in at least one mobile device (2):

        capturing an image sequence of an environment (12) of the at least one mobile device (2) by means of at least one camera (4), identifying and classifying objects (28) in the captured image sequence by means of an evaluation unit (5), determining object positions of the objects (28) relative to the mobile device (2) by means of the evaluation unit (5), defining a section (13, 20) in the environment (12), the section (13, 20) having a predetermined size and predetermined boundaries (14, 15, 16, 17, 21), the rear boundary (21) of a front section (20) corresponding to the front boundary (14) of a section (13) defined before it, assigning the identified and classified objects (28) to the determined object positions in the defined section (13, 20), determining a lane (22) present in the section (13, 20) by means of the evaluation unit (5), the determined lane (22) in a section (13, 20) being described by a corridor comprising a left-hand lane boundary (24) and a right-hand lane boundary (23), the left-hand lane boundary (24) and the right-hand lane boundary (23) each being described as lane functions, transmitting object information and the object positions of the identified and classified objects (28), section information relating to the defined section (13, 20), lane information and an item of time information to a map creation device (3) by means of a transmitting device (6), the map creation device (3) being a central server outside the mobile device (2), repeating the preceding steps in order to define further sections (13, 20) of the environment (12) ;

    - in the map creation device (3):

        receiving the object information and the object positions, the section information, the lane information and the time information for each of the sections (13, 20) from the at least one mobile device (2), comparing the individual sections (13, 20) with one another on the basis of the object information and object positions, the section information, the lane information and the time information, joining the sections (13, 20) of the at least one mobile device (2) at their respectively adjacent boundaries (14, 21), merging the joined sections (13, 20) of the at least one mobile device (2) to form a digital map (60) .

2. Method according to Claim 1, **characterized in that** the lane functions are in the form of third degree polynomial functions.

3. Method according to one of the preceding claims, **characterized in that** the sections (13, 20) of the at least one mobile device (2) are joined at their respectively adjacent boundaries (14, 21) by means of a similarity comparison, in which case a predetermined value for a similarity must be exceeded so that sections are identified as adjacent.

**4.** Method according to one of the preceding claims, **characterized in that** the joined sections (13, 20) of the at least one mobile device (2) are merged taking into account a weighting, the weighting being defined by the time information and/or at least one further criterion.

**5.** Method according to one of the preceding claims, **characterized in that** the process of merging the joined sections (13, 20) of the at least one mobile device (2) comprises averaging a plurality of object positions determined for an object (28).

**6.** Method according to one of the preceding claims, **characterized in that** the process of joining the sections (13, 20) of the at least one mobile device (2) at their respectively adjacent boundaries (14, 21), at least at these boundaries (14, 21) or in regions around the boundaries (14, 21), comprises a comparison of the lanes (22) or the lane functions of the sections (13, 20).

**7.** Method according to one of the preceding claims, **characterized in that** the evaluation unit (5) additionally captures additional information for a section (13, 20), which additional information is transmitted to the map creation device (3) by the transmitting device (6), and/or this additional information or further additional information is stored by the map creation device (3) for this section (13, 20) in the digital map (60).

**8.** System (1) for creating a digital map (60), comprising:

- at least one mobile device (2) having:

at least one camera (4) for capturing an image sequence of an environment (12) of the at least one mobile device (2), an evaluation unit (5), and a transmitting device (6) for communicating with a map creation device (3), the evaluation unit (5) being designed to identify and classify objects (28) in the captured image sequence, to determine object positions of the objects (28) relative to the mobile device (2), to define a section (13, 20) in the environment (12), the section (13, 20) having a predetermined size and predetermined boundaries (14, 15, 16, 17, 21), the rear boundary (21) of a front section (20) corresponding to the front boundary (14) of a section (13) defined before it, to assign identified and classified objects (28) to the determined object positions in the defined section (13, 20), to determine a lane (22) of the motor vehicle 50 present in a section (13, 20), the determined lane (22) in a section (13, 20) being described by a corridor comprising a left-hand lane boundary (24) and a right-hand lane boundary (23), the left-hand lane boundary (24) and the right-hand lane boundary (23) each being described as lane functions,
to transmit object information and the object positions of the identified and classified objects (28), section information relating to the defined section (13, 20), lane information and an item of time information to the map creation device (3) by means of the transmitting device (6), the map creation device (3) being a central server outside the mobile device (2), and
to repeat the preceding steps in order to define further sections (13, 20) of the environment (12); and

- the map creation device (3) which is designed to receive the object information and the object positions, the section information, the lane information and the time information for each of the sections (13, 20) from the at least one mobile device (2), to compare the individual sections (13, 20) with one another on the basis of the object information and object positions, the section information, the lane information and the time information, to join the sections (13, 20) of the at least one mobile device (3) at their respectively adjacent boundaries (14, 21), and to merge the joined sections (13, 20) of the at least one mobile device (2) to form a digital map (60) .

**Revendications**

**1.** Procédé permettant de créer une carte numérique (60), comprenant les étapes consistant à :

- dans au moins un dispositif mobile (2) :

acquérir une séquence d'images d'un environnement (12) du au moins un dispositif mobile (2) par au moins une caméra (4), identifier et classifier des objets (28) dans la séquence d'images acquise par une unité d'évaluation (5), déterminer des positions d'objet des objets (28) par rapport au dispositif mobile (2) à l'aide de l'unité d'évaluation (5), définir une section (13, 20) dans l'environnement (12), la section (13, 20) présentant une taille prédéterminée, ainsi que des limites prédéterminées (14, 15, 16, 17, 21), la limite arrière (21) d'une section avant (20) correspondant à la limite avant (14) d'une section (13) définie devant celle-ci,

associer les objets identifiés et classifiés (28) aux positions d'objet déterminées dans la section définie (13, 20),

établir une voie de circulation (22) présente dans la section (13, 20) à l'aide de l'unité d'évaluation (5), la voie de circulation établie (22) dans une section (13, 20) étant décrite par un couloir composé d'une limite de voie de circulation gauche (24) et d'une limite de voie de circulation droite (23), la limite de voie de circulation gauche (24) et la limite de voie de circulation droite (23) étant respectivement décrites comme des fonctions de voie de circulation,

transmettre des informations d'objet et les positions d'objet des objets identifiés et classifiés (28), des informations de section concernant la section définie (13, 20), des informations de voie de circulation et une information de temps à un dispositif de création de carte (3) à l'aide d'un dispositif d'émission (6), le dispositif de création de carte (3) étant un serveur central en dehors du dispositif mobile (2),

répéter les étapes précédentes pour définir d'autres sections (13, 20) de l'environnement (12) ;

- dans le dispositif de création de carte (3) :

recevoir de l'au moins un dispositif mobile (2) les informations d'objet et les positions d'objet, les informations de section, les informations de voie de circulation et l'information de temps concernant chacune des sections (13, 20),

comparer les sections individuelles (13, 20) les unes avec les autres sur la base des informations d'objet et des positions d'objet, des informations de section, des informations de voie de circulation et des informations de temps,

assembler les sections (13, 20) du au moins un dispositif mobile (2) au niveau de leurs limites respectivement adjacentes (14, 21), fusionner les sections assemblées (13, 20) du au moins un dispositif mobile (2) en une carte numérique (60).

2. Procédé selon la revendication 1, **caractérisé en ce que** les fonctions de voie de circulation sont réalisées sous forme de fonctions polynomiales du troisième degré.

3. Procédé selon l'une quelconque des revendications précédentes, **caractérisé en ce que** l'assemblage des sections (13, 20) du au moins un dispositif mobile (2) est effectué au niveau de leurs limites respectivement adjacentes (14, 21) par une comparaison de similitude, et une valeur prédéterminée pour une similitude devant être dépassée pour que des sections soient identifiées comme adjacentes.

4. Procédé selon l'une quelconque des revendications précédentes, **caractérisé en ce que** la fusion des sections assemblées (13, 20) du au moins un dispositif mobile (2) est effectuée en tenant compte d'une pondération, la pondération étant définie par l'information de temps et/ou par au moins un autre critère.

5. Procédé selon l'une quelconque des revendications précédentes, **caractérisé en ce que** la fusion des sections assemblées (13, 20) du au moins un dispositif mobile (2) comprend un calcul de moyenne de plusieurs positions d'objet déterminées pour un objet (28).

6. Procédé selon l'une quelconque des revendications précédentes, **caractérisé en ce que** l'assemblage des sections (13, 20) du au moins un dispositif mobile (2) au niveau de leurs limites respectivement adjacentes (14, 21) comprend, au moins dans ces limites (14, 21) ou dans des zones autour des limites (14, 21), un rapprochement des voies de circulation (22) ou des fonctions de voie de circulation des sections (13, 20).

7. Procédé selon l'une quelconque des revendications précédentes, **caractérisé en ce que** l'unité d'évaluation (5) détecte pour une section (13, 20) en outre des informations supplémentaires qui sont transmises du dispositif d'émission (6) au dispositif de création de carte (3), et/ou ces informations supplémentaires ou d'autres informations supplémentaires du dispositif de création de carte (3) pour cette section (13, 20) sont stockées sur la carte numérique (60).

8. Système (1) permettant de créer une carte numérique (60), comprenant :

- au moins un dispositif mobile (2), présentant :

au moins une caméra (4) servant à acquérir une séquence d'images d'un environnement (12) du au moins un dispositif mobile (2),
une unité d'évaluation (5), et
un dispositif d'émission (6) servant à communiquer avec un dispositif de création de carte (3),
l'unité d'évaluation (5) étant réalisée
pour identifier et classifier des objets (28) dans la séquence acquise, déterminer des positions d'objet des objets (28) par rapport au dispositif mobile (2), définir une section (13, 20) dans l'environnement (12), la section (13, 20) présentant une taille prédéterminée, ainsi que des limites prédéterminées (14, 15, 16, 17, 21), la limite arrière (21) d'une section avant (20) correspondant à la limite avant (14) d'une section définie devant celle-ci (13), associer des objets identifiés et classifiés (28) aux positions d'objet déterminées dans la section définie (13, 20),

pour établir une voie de circulation (22) du véhicule automobile (50) présente dans une section (13, 20), la voie de circulation établie (22) dans une section (13, 20) étant décrite par un couloir composé d'une limite de voie de circulation gauche (24) et d'une limite de voie de circulation droite (23), la limite de voie de circulation gauche (24) et la limite de voie de circulation droite (23) étant respectivement décrites comme des fonctions de voie de circulation,

pour envoyer au dispositif de création de carte (3) des informations d'objet et les positions d'objet des objets identifiés et classifiés (28), des informations de section concernant la section définie (13, 20), des informations de voie de circulation et une information de temps au moyen du dispositif d'émission (6), le dispositif de création de carte (3) étant un serveur central en dehors du dispositif mobile (2), et

pour répéter les étapes précédentes afin de définir d'autres sections (13, 20) de l'environnement (12) ; et

- le dispositif de création de carte (3) qui est réalisé

pour recevoir du au moins un dispositif mobile (2) les informations d'objet et les positions d'objet, les informations de section, les informations de voie de circulation et l'information de temps concernant chacune des sections (13, 20), pour comparer les sections individuelles (13, 20) les unes avec les autres sur la base des informations d'objet et des positions d'objet, des informations de section, des informations de voie de circulation et de l'information de temps, pour assembler les sections (13, 20) du au moins un dispositif mobile (2) au niveau de leurs limites respectivement adjacentes (14, 21) et pour fusionner les sections assemblées (13, 20) de l'au moins un dispositif mobile (2) en une carte numérique (60).

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014002821 A1
- DE 102011119762 A1
- DE 102012208974 A1
- DE 102013208521 A1
- WO 2009097918 A2